# EUROPEAN PATENT SPECIFICATION

(11) **EP 3 263 762 B1**
(45) Date of publication and mention of the grant of the patent: **23.01.2019**
(21) Application number: 17178007.5
(22) Date of filing: 27.06.2017
(51) Int. Cl.: D06N 3/00, D06N 7/00, D06M 23/12

(54) **FUNCTIONALIZED CARPET AND METHOD FOR MAKING THE CARPET**
FUNKTIONALISIERTER TEPPICH UND VERFAHREN ZUR HERSTELLUNG DES TEPPICHS
TAPIS FONCTIONNALISÉ ET SON PROCÉDÉ DE FABRICATION

(30) Priority: 27.06.2016 IT UA20164689
(43) Date of publication of application: 03.01.2018
(73) Proprietor: ALMA SPA, 59100 Prato (IT)
(72) Inventor: RANALDO, Marco Angelo, 50041 CALENZANO (FI) (IT)
(74) Representative: Firmati, Leonardo

(56) References cited:
- EP-A2- 1 026 311
- JP-A- H09 238 817
- US-A1- 2004 022 990

## Description

This invention relates to a functionalized carpet.

More specifically, this invention relates to a functionalized needled punched carpet designed for use in setting up exhibitions, display areas, or in any case events of a temporary nature.

This invention also relates to a method for making a functionalized needled punched carpet and the use of the carpet.

The expression needled punched carpet means a type of non-woven carpet wherein the fibres are grouped together to form a continuous mat generated with a carding step, and subjected to a process for mutual penetration by the vertical movement of a plurality of needles.

The penetration action gives the mat of non-woven fibres a certain consistency even with limited thicknesses.

A subsequent finishing step, such as resin coating or heat setting contributes to increasing the strength characteristics of the carpet.

This type of carpet, thanks to a relatively inexpensive production cost, a high strength and a reduced weight, is used increasingly in the setting up of exhibitions, display areas, or in any case for all those events in which it is necessary to make floorings of a temporary nature which nevertheless guarantee high standards both in terms of quality and appearance.

The needle punched carpets of known type although well received by the market are not always able to satisfy the need of the particular buyers who, as mentioned, may be of many different types.

More specifically, precisely because of the many different uses for which the carpets are required, they cannot always, in their standard configuration, fully satisfy particular needs resulting from the specific requirements which could be satisfied if they were made specially. Further, due to the extremely large surface areas which are normally the case for exhibitions and the like, the carpets could easily characterise the environment itself in which they are inserted, if this characterisation is developed as a function of the specific needs of the buyer. US-A-2004/022990 (Sitabkhan) discloses compositions and methods for providing extended release of fragrances or other agents into various textile materials with use of micro-capsules. The aim of this invention is therefore to provide a functionalized carpet which able to overcome the existing shortcomings of carpets and is, at the same time, simple and efficient to use.

A further aim of this invention is to provide a method for making functionalized carpet which is practical and inexpensive to implement. The technical features of the invention, with reference to the above aims, are clearly described in the appended claims and its advantages are apparent from the detailed description which follows.

The functionalized carpet according to this invention comprises an upper layer of needle punched fibres and a lower reinforcing layer.

The upper layer is in effect, advantageously, made starting from a mat of carded fibres subjected to a needle punching step.

As mentioned, in the needle punching step a multiplicity of needles move vertically, engaging the mat of fibres and plaiting them so as to form between them, amongst other things, a plurality of gaps.

The above-mentioned lower reinforcing layer is made for structurally reinforcing the carpet, preventing the needle punched fibres from being dispersed with use.

Further, the lower reinforcement layer is designed to guarantee a gripping surface for the adhesive means for anchoring the carpet to the flooring to be covered.

Advantageously, the fibres used to make the above-mentioned upper layer are of the polymer type.

The polymer used is preferably polypropylene.

Other types of fibre can also be used, such as polyester, polyamide fibres, natural fibres or the like.

Advantageously, the lower reinforcement layer is made of a resin-based material.

Preferably, the material used for the lower reinforcement layer comprises styrene-butadiene resins.

Even more preferably, the material used for the lower reinforcement layer comprises styrene-butadiene resins mixed with additives.

Further materials which can used for making the lower reinforcement layer are acrylic resins, thermoplastic resins or latexes.

According to alternative embodiments intended for special uses, the carpet comprises a base of rubbery material, positioned below the above-mentioned upper and lower layers, the base being designed to come into contact with the flooring which the carpet is designed to cover.

The base of rubbery material guarantees an excellent adhesion to the flooring and, thanks also to the greater total weight of the carpet, limits the formation of wrinkles and the accidental lifting up of the carpet.

These alternative embodiments equipped with a base made of rubbery material are used, for example, in situations wherein there is the passage of animals which, otherwise, might be in difficulty where the carpet raises from the flooring and obstructs walking.

Further, the above-mentioned base made of rubbery material constitutes an impermeable barrier to the penetration of liquids.

Preferably, the above-mentioned base made of rubbery material comprises a sheet obtained by extrusion.

The functionalized carpet according to this invention comprises a plurality of microcapsules distributed inside the upper layer of needle punched fibres at the above-mentioned gaps.

In other words, as mentioned above, the needle punching step forms between the fibres which make up the upper layer a multiplicity of gaps which define the housings for the above-mentioned microcapsules. These microcapsules, made using nanotechnologies, with processes of substantially known type and not forming part of this invention, contain predetermined substances, designed to modify the ambient conditions as described in more detail below.

The above-mentioned microcapsules are made to break under the action of treading on the carpet by users and thereby freeing the substance contained in them.

The term 'treading' is also used to mean any mechanical action designed to break the above-mentioned microcapsules.

Advantageously, as mentioned, the above-mentioned substance contained inside the microcapsule, once the latter is broken, is free to disperse and carry out a relative particular action for conditioning the environment.

The predetermined substance contained in the microcapsules is chosen from fragranced volatile substances, antibacterial volatile substances, heat adjusting substances and odour-absorbing volatile substances. Advantageously the use of fragranced volatile substances makes it possible to add a fragrance to the room in which the carpet is located, diffusing it thanks to relative volatility.

Advantageously, the use of antibacterial volatile substances, that is to say, in general, disinfecting or insecticide substances, allows a bactericidal and/or disinfection and/or insecticide action in the room in which the carpet is located, diffusing thanks to the relative volatility.

Advantageously, the use of volatile odour-absorbing substances allows an action for neutralisation of unpleasant odours present in the air of the room in which the carpet is located, spreading from it thanks to the relative volatility.

Advantageously, the use of heat-adjusting substances makes possible an action for adjusting the ambient temperature in the room in which the carpet is located. Examples of these heat-adjusting substances are embodied by the so-called phase change materials (PCM), which are now widely used in building works, for example in the production of heat insulating panels. The most widespread phase change materials are salt hydrates and paraffins.

The invention also relates to a method for making a functionalized carpet. The method according to the invention comprises a step of preparing a continuous mat of fibres. The fibres which make up the mat are non-woven fibres.

According to a preferred embodiment, the above-mentioned fibres are made of polymeric material.

This step of preparing a continuous mat of fibres of polymeric material advantageously comprises the steps of creating twists of fibre starting from the polymer in grains and carding of the fibre.

This is followed by a step of continuous needle punching of the mat to define the above-mentioned upper layer of the carpet in which there are gaps between the fibres.

A subsequent step of the process according to the invention comprises the application, in the gaps existing between the needle punched fibres, of microcapsules containing a predetermined substance designed to modify the ambient conditions.

In order to retain the non-woven fibres of the upper layer and also to prevent the escape of the microcapsules there is the step of making a reinforcing lower layer, directly in contact with the above-mentioned upper layer.

According to a preferred embodiment of the process, the above-mentioned step of applying microcapsules to the upper layer of needle punched fibres comprises a step of spreading the microcapsules on the layer.

According to a first variant embodiment of the process, the above-mentioned step of applying microcapsules to the upper layer of needle punched fibres comprises a step of spraying the microcapsules on the layer.

According to further variants not described further, the above-mentioned step of applying the microcapsules to the upper layer of needle punched fibres comprises a step of calendering microcapsules on the layer or a scraping step.

Calendering and scraping are two processes of substantially known type, and therefore not further described, for distributing a substance on a relative support.

Moreover, according to an alternative embodiment of the method just described, the latter comprises a step of coupling a base made of rubbery material to the above-mentioned upper and lower layers. Advantageously, the base made of rubbery material is obtained by an extrusion step.

Alternative embodiments of the method just described involve the use of different fibres. For example, in the case of fibres of natural origin the step of creating the twist typical of fibres of polymeric material is clearly not performed.

This invention achieves the preset aims and brings important advantages. By means of the functionalized carpet according to the invention it is in fact possible to condition the surrounding environment by spreading substances such as fragranced essences, antibacterial solutions, disinfectants, insecticides etc., so as to satisfy the uses for which the carpet is designed.

These opportunities appear particularly advantageous in the sector of use of needle punched carpets, designed for exhibitions and events which are often thematic and in any case of a temporary nature.

Consider, for example, a dog show wherein, advantageously, the carpet may diffuse insecticide substances which are able to remove insects which are annoying for the animals, or fragranced or odour-absorbing substances which are able to reduce the unpleasant odours produced by them.

Similarly, in the case of themed events, the carpet can diffuse substances relative to the theme of the event or at least with reference to the theme, such as, for example, in the case of show regarding fruit and vegetable products the carpet can diffuse a fruit fragrance, such as lemon or the like. Another advantage linked to this invention is due to the fact that the activation of the predetermined substances designed to modify the ambient conditions only occurs at the moment of the actual use of the carpets, whilst the effectiveness of the substances remains unchanged until that moment.

In other words, the fact that the above-mentioned predetermined substances are contained inside microcapsules allows the efficiency of these substances to be maintained intact for a long time, thereby preventing them from being dispersed during storage.

This advantageously allows the carpet to be produced some time in advance of the actual date of use, as it is possible to prepare, at the time of the use, a product ready for use and absolutely efficient.

## Claims

1. A functionalized carpet for covering floorings, comprising:
- an upper layer of needle punched fibres of the polymeric type in which there are gaps between the fibres,
- a lower reinforcement layer configured for retaining the fibres of the upper layer, **characterised in that** it comprises a plurality of microcapsules distributed inside the upper layer of needle punched fibres at the gaps, the microcapsules containing a predetermined substance designed to modify the ambient conditions and being configured to break under the action of treading on the carpet and releasing the substance.

2. The carpet according to claim 1, **characterised in that** the predetermined substance is chosen from the group consisting of fragranced volatile substances, antibacterial volatile substances, thermo-regulating substances and odour-absorbing volatile substances.

3. The functionalised carpet according to any one of the preceding claims, **characterised in that** it comprises a base made of rubbery material, positioned beneath the upper and lower layers and designed to come into contact with the flooring.

4. A method for making a carpet according o the previous claims, comprising the following steps:
- preparing a continuous mat of fibres,
- needle punching the continuous mat to define an upper layer of the carpet in which there are gaps between the fibres,
- applying in the gaps microcapsules containing a predetermined substance designed to modify the ambient conditions,
- making a lower reinforcement layer configured for retaining the fibres of the upper layer.

5. The method according to claim 4, **characterised in that** the application step comprises a step of spreading the microcapsules on the upper layer.

6. The method according to claim 4, **characterised in that** the application step comprises a step of spraying the microcapsules on the upper layer.

7. The method according to claim 4, **characterised in that** the application step comprises a step of scraping the microcapsules on the upper layer.

8. The method according to claim 4, **characterised in that** the application step comprises a step of rolling the microcapsules on the upper layer.

9. The method according to any of claims 4 to 8, **characterised in that** it comprises a step of coupling a base made of rubbery material to the upper and lower layers.

10. Use of a functionalized carpet according to any one of claims 1 to 3 for modifying the ambient conditions in the proximity of the carpet, comprising the steps of
- preparing a portion of the carpet,
- placing the portion of carpet for covering a flooring, **characterised in that** it comprises the step of breaking the microcapsules for releasing the substance contained therein, the step of breaking the microcapsules being actuated by treading on the carpet.

## Patentansprüche

1. Funktionalisierter Teppich zum Abdecken von Bodenbelägen, umfassend:
- eine obere Schicht aus vernadelten Fasern vom polymeren Typ, bei der Lücken zwischen den Fasern vorhanden sind,
- eine untere Verstärkungsschicht, die zum Zurückhalten der Fasern der oberen Schicht konfiguriert ist, **dadurch gekennzeichnet, dass** sie eine Vielzahl an Mikrokapseln umfasst, die innerhalb der oberen Schicht aus nadelförmigen Fasern an den Lücken verteilt sind, wobei die Mikrokapseln eine vorbestimmte Substanz enthalten, die ausgelegt ist, um die Umgebungsbedingungen zu modifizieren, und konfiguriert sind, um unter der Wirkung des Tretens auf den Teppich zu brechen und die Substanz freizusetzen.

2. Teppich nach Anspruch 1, **dadurch gekennzeichnet, dass** die vorbestimmte Substanz ausgewählt ist aus der Gruppe bestehend aus duftenden flüchtigen Substanzen, antibakteriellen flüchtigen Substanzen, wärmeregulierenden Substanzen und geruchsabsorbierenden flüchtigen Substanzen.

3. Funktionalisierter Teppich nach einem der vorhergehenden Ansprüche, **dadurch gekennzeichnet, dass** er eine Basis aus gummiartigem Material umfasst, die unter der oberen und unteren Schichten angeordnet ist und ausgelegt ist, um mit dem Bodenbelag in Kontakt zu kommen.

4. Verfahren zur Herstellung eines Teppichs nach den vorhergehenden Ansprüchen, umfassend die folgenden Schritte:
- Vorbereiten einer kontinuierlichen Fasermatte,
- Vernadeln der kontinuierlichen Matte, um eine obere Schicht des Teppichs zu definieren, in der Lücken zwischen den Fasern vorhanden sind,
- Auftragen von Mikrokapseln in die Lücken, die eine vorbestimmte Substanz enthalten, ausgelegt, um die Umgebungsbedingungen zu modifizieren,
- Machen einer unteren Verstärkungsschicht, die konfiguriert ist, um die Fasern der oberen Schicht zurückzuhalten.

5. Verfahren nach Anspruch 4, **dadurch gekennzeichnet, dass** der Auftragungsschritt einen Schritt zum Verteilen der Mikrokapseln auf der oberen Schicht umfasst.

6. Verfahren nach Anspruch 4, **dadurch gekennzeichnet, dass** der Auftragungsschritt einen Schritt zum Aufsprühen der Mikrokapseln auf der oberen Schicht umfasst.

7. Verfahren nach Anspruch 4, **dadurch gekennzeichnet, dass** der Auftragungsschritt einen Schritt zum Abkratzen der Mikrokapseln auf der oberen Schicht umfasst.

8. Verfahren nach Anspruch 4, **dadurch gekennzeichnet, dass** der Auftragungsschritt einen Schritt zum Walzen der Mikrokapseln auf der oberen Schicht umfasst.

9. Verfahren nach einem der Ansprüche 4 bis 8, **dadurch gekennzeichnet, dass** es einen Schritt zum Koppeln einer Basis aus einem gummiartigen Material an die obere und untere Schicht umfasst.

10. Verwendung eines funktionalisierten Teppichs nach einem der Ansprüche 1 bis 3, um die Umgebungsbedingungen in der Nähe vom Teppich zu modifizieren, umfassend die Schritte zum
- Vorbereiten eines Abschnitts des Teppichs,
- Platzieren des Teppichabschnitts zum Abdecken eines Bodenbelags, **dadurch gekennzeichnet, dass** er den Schritt zum Brechen der Mikrokapseln zur Freisetzung der darin enthaltenen Substanz umfasst, wobei der Schritt zum Brechen der Mikrokapseln durch Treten auf den Teppich betätigt wird.

## Revendications

1. Tapis fonctionnalisé servant à recouvrir des sols, comprenant :
- une couche supérieure de fibres aiguilletées de type polymère dans laquelle se trouvent des espaces entre les fibres,
- une couche inférieure de renforcement configurée pour retenir les fibres de la couche supérieure, **caractérisé en ce qu'**elle comprend une pluralité de microcapsules réparties à l'intérieur de la couche supérieure des fibres aiguilletées en correspondance des espaces, les microcapsules contenant une substance prédéterminée conçue pour modifier les conditions ambiantes et étant configurées pour se briser, suite au foulage du tapis, et libérer la substance.

2. Tapis selon la revendication 1, **caractérisé en ce que** la substance prédéterminée est choisie dans le groupe constitué par les substances suivantes : des substances volatiles parfumées, des substances volatiles antibactériennes, des substances thermo-régulantes et des substances volatiles absorbant les odeurs.

3. Tapis fonctionnalisé selon l'une quelconque des revendications précédentes, **caractérisé en ce qu'**il comprend une base, constituée de matériau caoutchouc, positionnée sous les couches supérieure et inférieure et conçue pour se mettre en contact avec le sol.

4. Procédé de fabrication d'un tapis selon les revendications précédentes, comprenant les étapes suivantes :
- préparer un matelas continu de fibres,
- aiguilleter le matelas continu pour définir une couche supérieure du tapis dans laquelle se trouvent des espaces entre les fibres,
- appliquer dans les espaces des microcapsules contenant une substance prédéterminée conçue pour modifier les conditions ambiantes,
- réaliser une couche inférieure de renforcement configurée pour retenir les fibres de la couche supérieure.

5. Procédé selon la revendication 4, **caractérisé en ce que** l'étape d'application comprend une étape consistant à étaler les microcapsules sur la couche supérieure.

6. Procédé selon la revendication 4, **caractérisé en ce que** l'étape d'application comprend une étape consistant à pulvériser les microcapsules sur la couche supérieure.

7. Procédé selon la revendication 4, **caractérisé en ce que** l'étape d'application comprend une étape consistant à gratter les microcapsules sur la couche supérieure.

8. Procédé selon la revendication 4, **caractérisé en ce que** l'étape d'application comprend une étape consistant à faire rouler les microcapsules sur la couche supérieure.

9. Procédé selon l'une quelconque des revendications de 4 à 8, **caractérisé en ce qu'**il comprend une étape consistant à accoupler une base constituée d'un matériau caoutchouc aux couches supérieure et inférieure.

10. Utilisation d'un tapis fonctionnalisé selon l'une quelconque des revendications de 1 à 3 pour modifier les conditions ambiantes à proximité du tapis, comprenant les étapes de
- préparer une partie du tapis,
- placer la partie du tapis pour recouvrir un sol, **caractérisée en ce qu'**elle comprend l'étape consistant à briser les microcapsules pour libérer la substance contenue en son sein, l'étape consistant à briser les microcapsules étant activée par foulage du tapis.
